# EUROPEAN PATENT APPLICATION

(11) **EP 4 701 042 A1**
(43) Date of publication of application: **25.02.2026**
(21) Application number: 24792652.0
(22) Date of filing: 16.04.2024
(51) Int. Cl.: H02J 50/10, B60L 5/00, B60L 53/12, B60M 7/00, B65G 1/00, H02J 7/00, H02J 50/40

(54) **NON-CONTACT POWER SUPPLY SYSTEM**

(30) Priority: 19.04.2023 JP 2023068259
(71) Applicant: DENSO CORPORATION, Kariya-city, Aichi 448-8661 (JP)
(72) Inventor: SHIBANUMA, Mitsuru, Kariya-city, Aichi 448-8661 (JP); OBAYASHI, Kazuyoshi, Kariya-city, Aichi 448-8661 (JP); TAKAHASHI, Eisuke, Kariya-city, Aichi 448-8661 (JP); YAMADA, Hidetoshi, Kariya-city, Aichi 448-8661 (JP); YAMAGUCHI, Nobuhisa, Kariya-city, Aichi 448-8661 (JP); KANESAKI, Masaki, Kariya-city, Aichi 448-8661 (JP)
(74) Representative: TBK
(86) International application number: PCT/JP2024/015076
(87) International publication number: WO 2024/219378

(57) **Abstract**

A contactless power supply system (1, 1a to 1i) includes: a mobile body (30, 31a to 31d, 32a, to 32d, 33 to 35) that includes a power reception apparatus (310), and transfers a work object from a first work site (WA1) to a second work site (WA2); and a power transmission apparatus (21 to 25) that is capable of supplying power to the power reception apparatus without contact in a state in which the mobile body is stopped at at least a scheduled stop position (Ar11, Ar13, Ar22 to Ar25, Ar27, Ar32, Ar201, Ar41, Ar202, Ar51, Ar52, Ar61 to Ar64, Ta1 to Tg1, Ta2, Tc2, Te2, Tg2, Th3, Tj3, T13, Ar23a) at which the mobile body is scheduled to stop within a movement path of the mobile body between the first work site and the second work site, or the mobile body is moving. The power reception apparatus includes at least a power reception coil (311) provided on a side surface side of the mobile body.

## Description

### [Cross-Reference to Related Application]

The present application is based on and claims the benefit of priority from Japanese Patent Application No. 2023-068259, filed on April 19, 2023, the description of which is incorporated herein by reference.

### [Technical Field]

The present disclosure relates to a contactless power supply system.

### [Background Art]

Since the past, conveyance systems in which, in a factory, a warehouse, or the like, work objects such as products or parts are transferred using a mobile body such as an Automated Guided Vehicle (AGV), an autonomous forklift, or the like have been proposed. In a system in PTL 1, cargo transported by a truck is transferred from a truck berth to a production site using the mobile body, such as the autonomous forklift and the autonomous AGV. In addition, in PTL 1, the mobile body being charged through contactless power supply (wireless power supply) is disclosed.

### [Citation List]

### [Patent Literature]

[PTL 1] JP 2021-062964 A

### [Summary]

Although PTL 1 mentions efficiency of conveyance of work objects in a factory or a warehouse, with regard to contactless power supply (wireless power supply), PTL 1 merely describes that "wireless power supply can make manual charging operations for batteries unnecessary." However, to perform contactless power supply, the mobile body is required to travel near a power transmission apparatus or stop near the power transmission apparatus. Such operations of the mobile body affect efficiency of conveyance. Therefore, a technology that enables actualization of efficiency in conveyance of work objects taking into consideration operations of a mobile body for contactless power supply is desired.

An aspect of the present disclosure provides a contactless power supply system. The contactless power supply system includes: a mobile body that includes a power reception apparatus, and transfers a work object from a first work site to a second work site; and a power transmission apparatus that is capable of supplying power to the power reception apparatus without contact in at least either of a state in which the mobile body is stopped at at least a scheduled stop position at which the mobile body is scheduled to stop within a movement path of the mobile body between the first work site and the second work site, and a state in which the mobile body is moving along the movement path, in which the power reception apparatus includes a power reception coil that is provided on at least a side surface side of the mobile body.

As a result of the contactless power supply system according to the above-described aspect, the power transmission apparatus that is capable of supplying power to the power reception apparatus without contact in at least either of the state in which the mobile body is stopped at at least the scheduled stop position at which the mobile body is scheduled to stop within the movement path of the mobile body from the first work site to the second work site, and the state in which the mobile body is moving along the movement path. Therefore, the mobile body need not travel to a power transmission apparatus that is provided in a position outside the movement path for contactless power supply. Consequently, efficiency of conveyance of the work object can be obtained. In addition, space required for the mobile body to travel to the power transmission apparatus is not required separately from the movement path. Consequently, space reduction of a work area can be achieved. Furthermore, the power reception apparatus includes at least the power reception coil provided on the side surface side of the mobile body. Therefore, the power transmission apparatus need not be disposed underground or under a floor. Consequently, the system is more easily constructed.

The present disclosure can be implemented according to various aspects. For example, the present disclosure can be implemented according to aspects such as a vehicle position estimation method, a vehicle position estimation apparatus, a computer program for implementing a vehicle position estimation method, and a non-transitory storage medium in which the computer program is recorded.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a side view of a conveyance system to which a contactless power supply system according to an embodiment of the present disclosure is applied, illustrating an overall configuration of the conveyance system;
Fig. 2 is a top view of a conveyance system according to a first embodiment, illustrating an overall configuration of the conveyance system;
Fig. 3 is a block diagram schematically illustrating a configuration of a mobile body and a first power transmission apparatus;
Fig. 4 is a side view of a conveyance system to which a contactless power supply system according to a second embodiment is applied, illustrating an overall configuration of the conveyance system;
Fig. 5 is a top view of the conveyance system according to the second embodiment, illustrating an overall configuration of the conveyance system;
Fig. 6 is a block diagram illustrating a configuration of a mobile body according to the second embodiment;
Fig. 7 is a top view schematically illustrating an external shape of the mobile body according to the second embodiment;
Fig. 8 is a block diagram illustrating a configuration of a power transmission apparatus according to the second embodiment;
Fig. 9 is a side view of a conveyance system to which a contactless power supply system according to a third embodiment is applied, illustrating an overall configuration of the conveyance system;
Fig. 10 is a top view of the conveyance system according to the third embodiment, illustrating an overall configuration of the conveyance system;
Fig. 11 is a side view of a conveyance system to which a contactless power supply system according to a fourth embodiment is applied, illustrating a schematic configuration of the conveyance system;
Fig. 12 is a top view of the conveyance system according to the fourth embodiment, illustrating an overall configuration of the conveyance system;
Fig. 13 is a side view of a conveyance system to which a contactless power supply system according to a fifth embodiment is applied, illustrating an overall configuration of the conveyance system;
Fig. 14 is a top view of the conveyance system according to the fifth embodiment, illustrating an overall configuration of the conveyance system;
Fig. 15 is a side view of a conveyance system to which a contactless power supply system according to a sixth embodiment is applied, illustrating an overall configuration of the conveyance system;
Fig. 16 is a side view of an overall configuration of a conveyance system to which a contactless power supply system according to a seventh embodiment is applied, illustrating an overall configuration of the conveyance system;
Fig. 17 is a top view of a conveyance system to which a contactless power supply system according to an eighth embodiment is applied, illustrating an overall configuration of the conveyance system;
Fig. 18 is a top view of a conveyance system to which a contactless power supply system according to a ninth embodiment is applied, illustrating an overall configuration of the conveyance system; and
Fig. 19 is a top view of a conveyance system to which a contactless power supply system according to a tenth embodiment is applied, illustrating an overall configuration of the conveyance system.

### [Description of Embodiments]

### A. First embodiment

### A1. Apparatus configuration

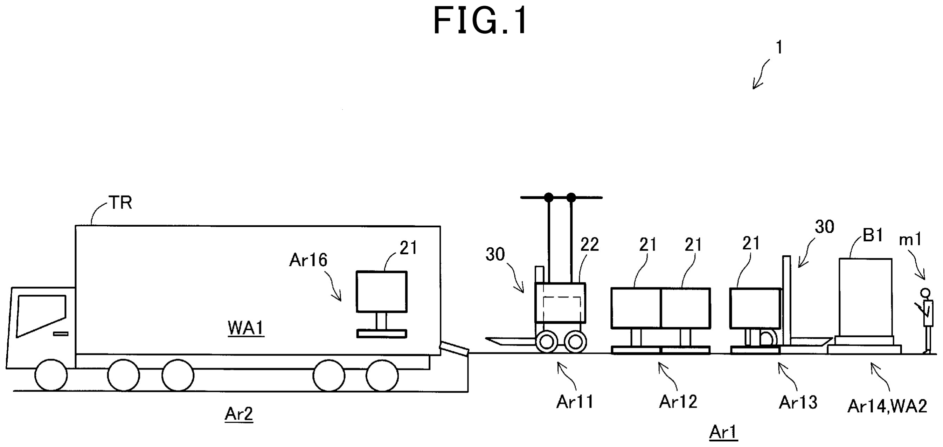

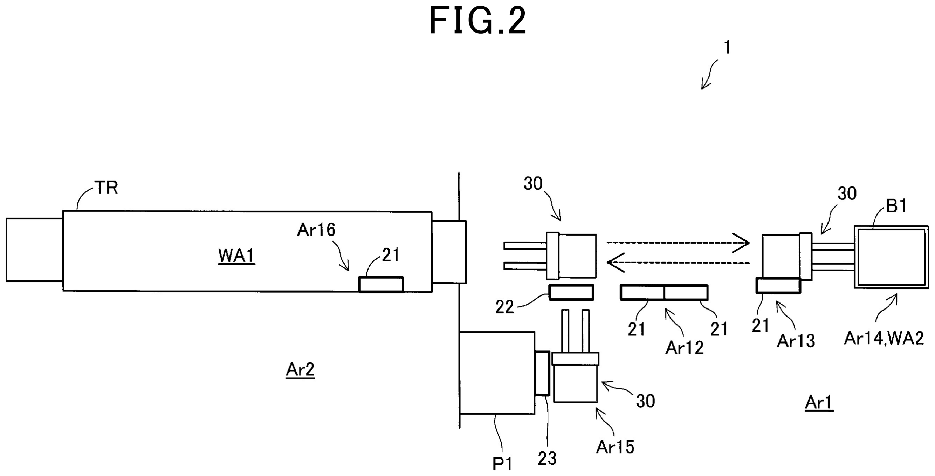

A contactless power supply system 1 shown in Fig. 1 and Fig. 2 is applied to a conveyance system for unloading a work object B1 from a truck TR stopped at a truck berth Ar2 and transferring the work object B1 to an inspection position Ar14 prescribed in advance in an indoor area Ar1. The work object B1 placed at the inspection position Ar14 is inspected by a worker m1. An interior of the truck TR corresponds to a "first work site WA1" of the present disclosure. In addition, the inspection position Ar14 corresponds to a "second work site WA2" of the present disclosure.

The contactless power supply system 1 includes three moving bodies 30, three first power transmission apparatuses 21, a single second power transmission apparatus 22, and a single third power transmission apparatus 23. Here, in Fig. 1, one mobile body 30 and the single third power transmission apparatus 23 are omitted for convenience of illustration. The mobile body 30 is configured as a forklift-type AGV capable of conveying the work object B1.

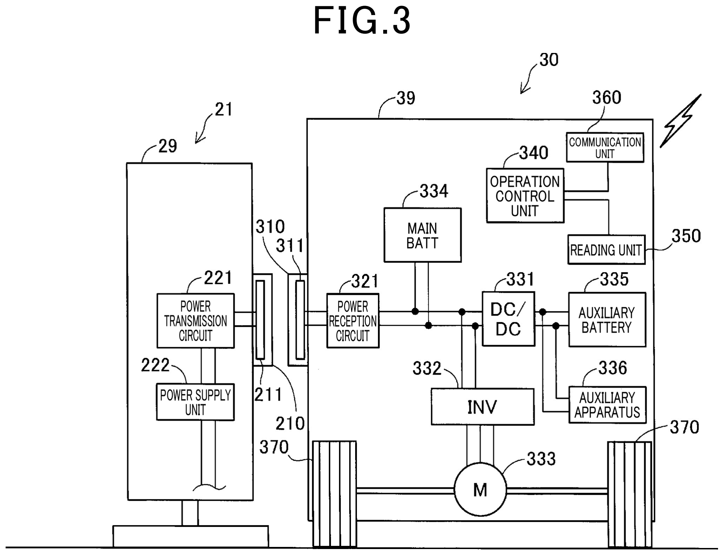

As shown in Fig. 3, the mobile body 30 includes a power reception apparatus 310, a power reception circuit 321, a main battery 334, a direct-current-to-direct-current (DC/DC) converter circuit 331, an inverter circuit 332, a motor 333, an auxiliary battery 335, an auxiliary apparatus 336, an operation control unit 340, a reading unit 350, and a communication unit 360. Here, Fig. 3 schematically shows an external configuration of the mobile body 30 and the first power transmission apparatus 21 when viewed in an advancing direction of the mobile body 30.

The power reception apparatus 310 receives power transmitted from the power transmission apparatuses 21 to 23. The power reception apparatus 310 includes a power reception coil 311 housed in a housing and wiring (not shown). The power reception coil 311 is connected to the power reception circuit 321. The power reception coil 311 includes a planar coil composed of wire wound on a predetermined plane. The power reception coil 311 is disposed along the advancing direction of the mobile body 30. In other words, the power reception coil 311 is provided such that a central axis of the power reception coil 311 is perpendicular to the advancing direction of the mobile body 30. According to the present embodiment, the power reception apparatus 310 is disposed so as to protrude in a lateral direction on a side surface of a housing 39 of the mobile body 30. Here, the power reception apparatus 310 may be disposed inside the housing 39.

The power reception circuit 321 includes a rectifier circuit that converts an alternating-current voltage output from the power reception coil 311 to a direct-current voltage. Direct-current power output from the power reception circuit 321 can be used to charge the main battery 334 or to drive the motor 333 via the inverter circuit 332. In addition, as a result of the direct-current power being stepped down using the DC/DC converter circuit 331, the direct-current power can be used to charge the auxiliary battery 335 and drive the auxiliary apparatus 336. The main battery 334 is a secondary battery that outputs a relatively high direct-current voltage for driving the motor 333. The DC/DC converter circuit 331 is configured as a step-down converter, and adjusts the voltage output from the power reception circuit 321 to a voltage that can be used by the auxiliary battery 335 and the auxiliary apparatus 336. The inverter circuit 332 converts the direct-current voltage of the main battery 334 to a three-phase alternating-current voltage and supplies the three-phase alternating-current voltage to the motor 333. The motor 333 is a three-phase, alternating-current motor and generates rotational force for a tire 370 of the mobile body 30. The auxiliary battery 335 is a secondary battery that outputs a direct-current voltage for driving the auxiliary apparatus 336. For example, the auxiliary apparatus 336 may correspond to the operation control unit 340, the reading unit 350, and the communication unit 360, described hereafter. The operation control unit 340 performs overall control of the mobile body 30. The reading unit 350 reads markers provided at predetermined positions in the indoor area Ar1 and at predetermined positions in the truck TR, and transmits the read information to the operation control unit 340. For example, the marker may be a two-dimensional marker. The operation control unit 340 controls operation of the mobile body 30 based on the information obtained by reading the markers. For example, the operation control unit 340 may perform acceleration, deceleration, stopping, right and left turns, and the like of the mobile body 30 based on the information read from the markers. The communication unit 360 is configured to be capable of wireless communication with the outside.

The power transmission apparatuses 21 to 23 transmit power to the mobile body 30 without contact. The first power transmission apparatus 21, the second power transmission apparatus 22, and the third power transmission apparatus 23 differ only in manner of setup and have identical functional configurations. The first power transmission apparatus 21 is set on a floor. The second power transmission apparatus 22 is set suspended from a ceiling. The third power transmission apparatus 23 is set on a wall surface. Regarding the configurations of the power transmission apparatuses 21 to 23, the first power transmission apparatus 21 will be described as a representative with reference to Fig. 3. Descriptions of the second power transmission apparatus 22 and the third power transmission apparatus 23 are omitted.

As shown in Fig. 3, the first power transmission apparatus 21 includes a power transmitting unit 210, a power transmission circuit 221, and a power supply unit 222. The power transmitting unit 210 includes a power transmission coil 211 housed in a housing and wiring (not shown). The power transmission coil 211 is connected to the power transmission circuit 221. According to the present embodiment, the power transmitting unit 210 is disposed so as to protrude from a side surface of a housing 29 of the first power transmission apparatus 21. Here, the power transmitting unit 210 may be disposed inside the housing 29. The power transmission coil 211 is provided such that a central axis of the power transmission coil 211 is perpendicular to the advancing direction of the mobile body 30.

The power transmission circuit 221 is a circuit that converts a direct-current voltage supplied from the power supply unit 222 to a high-frequency, alternating-current voltage and applies the high-frequency, alternating-current voltage to the power transmission coil 211. The power transmission circuit 221 includes an inverter circuit, a filter circuit, and a resonance circuit. According to the present embodiment, the inverter circuit, the filter circuit, and the resonant circuit are well known. Therefore, descriptions thereof are omitted. The power supply unit 222 is a circuit that supplies a direct-current voltage to the power transmission circuit 221. For example, the power supply unit 222 may receive power supplied from a system power supply through a power factor correction circuit (PFC), and supply the power to the power transmission circuit 221. Here, a configuration in which the power supply unit 222 receives power from the system power supply and distributes a voltage-converted 50/60 Hz alternating current to each power transmission circuit 221, and each power transmission circuit 221 performs PFC and alternating-current-to-direct-current conversion is also possible. The PFC is not shown in the drawing. The direct-current voltage output by the power supply unit 222 need not be a pure direct-current voltage and may include a certain amount of fluctuation (ripple). The power supply unit 222 of the first power transmission apparatus 21 is electrically connected to the system power supply by, for example, underfloor power wiring. On the other hand, the power supply unit 222 of the second power transmission apparatus 22 is electrically connected to the system power supply by power wiring provided in a ceiling space or the like.

As shown in Fig. 1 and Fig. 2, according to the present embodiment, the power transmission apparatuses 21 to 23 are set at predetermined positions Ar11, Ar12, Ar13, Ar14, Ar15, and Ar16. These positions Ar11 to Ar16 are present within a movement path of the mobile body 30 between the first work site WA1 and the second work site WA2.

Among the positions Ar11 to Ar16, the positions Ar11, Ar13, Ar15, and Ar16 correspond to positions at which the mobile body 30 is scheduled to stop (referred to, hereafter, as "scheduled stop positions"). The position Ar11 corresponds to a position at which the mobile body 30 is scheduled to stop to adjust a position of forks before boarding the truck TR. The position Arl3 corresponds to a position at which the mobile body 30 loaded with the work object B1 is scheduled to stop to unload the work object B1 at the second work site WA2, that is, the inspection position Ar14. The position Ar15 shown in Fig. 2 is a position corresponding to a space set in advance for the mobile body 30 to wait its turn to board the truck TR. According to the present embodiment, this position Ar15 is set near a pillar P1 that is a fixed object. The position Ar16 corresponds to a position inside the truck TR at which the mobile body 30 is scheduled to stop to load the work object B1. The mobile body 30 can receive power from the power transmission apparatuses 21 to 23 while stopped at the positions Ar11, Ar13, Ar15, and Ar16.

On the other hand, the remaining position Ar12 corresponds to a position at which the power reception apparatus 310 of the mobile body 30 that is passing by can be supplied power without contact, in an area midway on the movement path from inside the truck TR (inside the first work site WA1) to the inspection position Ar14 (the second work site WA2) and through which the mobile body 30 passes. The mobile body 30 can receive power supply from the first power transmission apparatus 21 when passing through the position Ar12 while traveling along the movement path.

Here, in a configuration in which the truck TR is an electric vehicle (EV) or a plug-in hybrid vehicle (PHEV), the configuration may be such that, when a battery of the truck TR is charged, a power distribution path branches off to also supply power to the power supply unit 222 of the first power transmission apparatus 21. In addition, in a configuration in which the truck TR is a hybrid vehicle (HEV), the configuration may be such that the truck TR generates power and supplies power to the power supply unit 222 of the first power transmission apparatus 21.

The contactless power supply system 1 according to the first embodiment, described above, includes the power transmission apparatuses 21 to 23 that are capable of supplying power to the power reception apparatus 310 without contact in a state in which the mobile body 30 is stopped at at least a scheduled stop position in which the mobile body 30 is scheduled to stop within the movement path of the mobile body 30 from the first work site WA1 to the second work site WA2, and in a state in which the mobile body 30 is moving along the movement path. Therefore, the mobile body 30 need not travel to a power transmission apparatus provided at a position off the movement path for contactless power supply. Consequently, efficiency of conveyance of the work object B1 can be obtained. In addition, space required for the mobile body 30 to travel to the power transmission apparatus is not required separately from the movement path. Consequently, space reduction of a work area can be achieved. Furthermore, the power reception apparatus 310 includes at least the power reception coil 311 provided on a side surface side of the mobile body 30. Therefore, the power transmission apparatuses 21 to 23 need not be disposed underground or under the floor. Consequently, the system is more easily constructed.

In addition, the power reception coil 311 is provided such that the central axis of the power reception coil 311 is perpendicular to the advancing direction. Consequently, power reception efficiency through the power transmission coil 211 set such that the central axis is perpendicular to the side surface in the third power transmission apparatus 23 set on the side surface of a fixed object (pillar P1) can be improved. Similarly, the first power transmission apparatus 21 and the second power transmission apparatus 22 are also provided such that the central axes thereof are perpendicular to the advancing direction of the mobile body 30. Consequently, the power reception coil 311 and the power transmission coil 211 can be opposing when the mobile body 30 stops or passes, and power reception efficiency can be improved.

Furthermore, the power transmission apparatus 21 set at the position Ar12 is set at a position at which the power reception apparatus 310 of the mobile body 30 that is passing by can be supplied power without contact, in an area of the movement path through which the mobile body 30 passes. Therefore, as a result of the mobile body 30 being supplied power while traveling, usage efficiency of the mobile body 30 can be increased and efficiency of conveyance of work objects can be improved, compared to a configuration in which the mobile body 30 is disposed at a position other than the movement path and supplied power, or a configuration in which the mobile body 30 is stopped at the position Ar12 and supplied power.

### B. Second embodiment

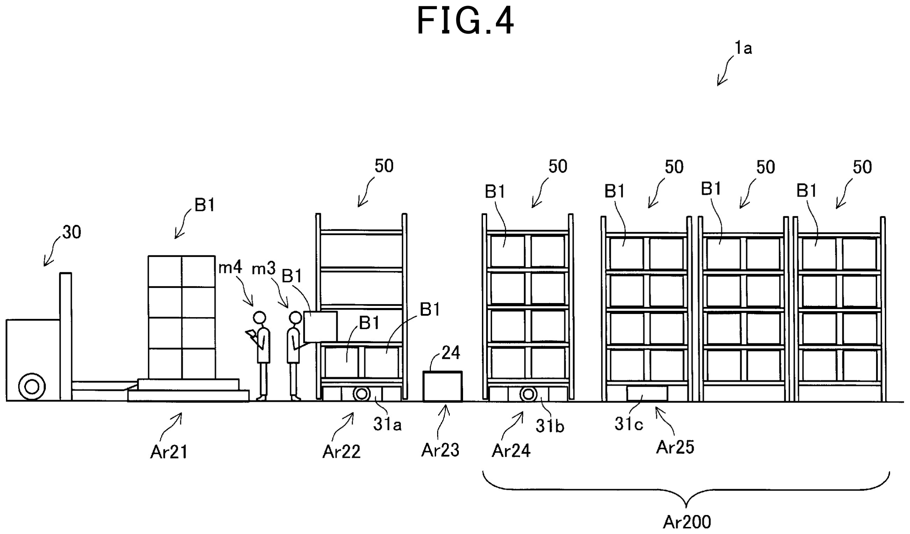

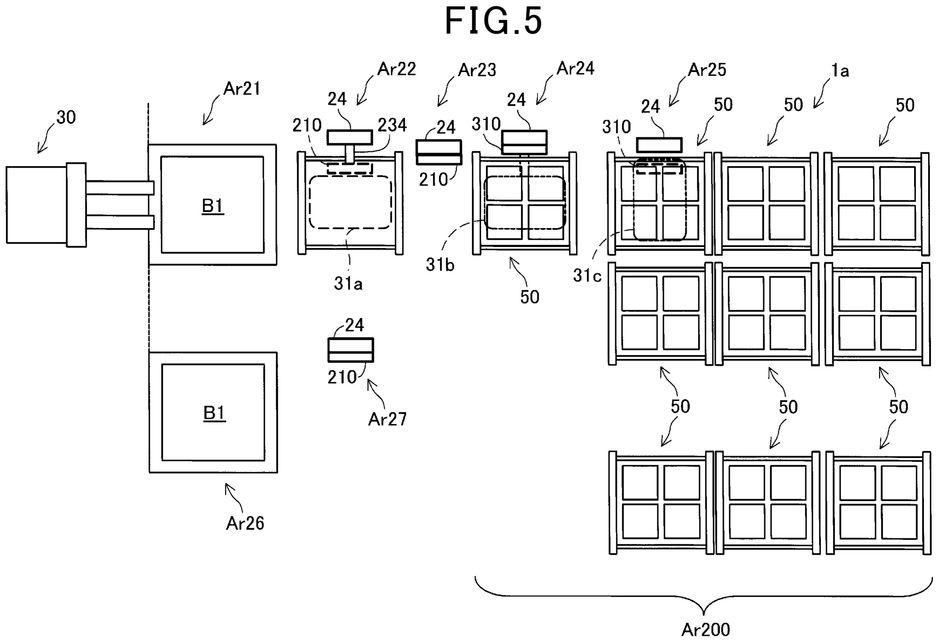

A contactless power supply system 1a shown in Fig. 4 and Fig. 5 is applied to a conveyance system for transferring the work object B1 from positions Ar21 and Ar26 that are inspection locations to a predetermined position within a storage area Ar200 that is a storage location for a movable storage rack 50 prescribed in advance, in a state in which the work object B1 is stored on the storage rack 50. Here, in Fig. 4, configurations at the position Ar26 and a position Ar27 are omitted. According to the second embodiment, the positions Ar21 and Ar22 correspond to the first work site WA1 in the present disclosure. The storage area Ar200 corresponds to the second work site WA2 in the present disclosure.

As shown in Fig. 4, the work object B1 that has been inspected by a worker m4 at the position Ar21 is subsequently stored on the storage rack 50 temporarily placed at the position Ar22 by a worker m3. The storage rack 50 includes a plurality of shelves. As shown in Fig. 4 and Fig. 5, the storage rack 50 is configured such that any of moving bodies 31a, 31b, and 31c can be disposed under a bottommost shelf thereof. In the examples in Fig. 4 and Fig. 5, the mobile body 31a is disposed under the bottommost shelf of the storage rack 50 at the position Ar22. In addition, the mobile body 31b is disposed under the bottommost shelf of the storage rack 50 at the position Ar24. Furthermore, the mobile body 31c is disposed under the bottommost shelf of the storage rack 50 at the position Ar25. The moving bodies 31a to 31c can raise and move the storage rack 50. Here, the storage rack 50 is configured to be capable of self-support in contact with a floor surface in a state in which the storage rack 50 is not being raised by the moving bodies 31a to 31c. In addition, in this state, the moving bodies 31a to 31c are capable of moving in and out of an area under the bottommost shelf of the storage rack 50. The storage rack 50 in which the work objects B1 are stored on all shelves thereof at the position Ar22 is moved to a predetermined position in the storage area Ar200 by any of the moving bodies 31a to 31c.

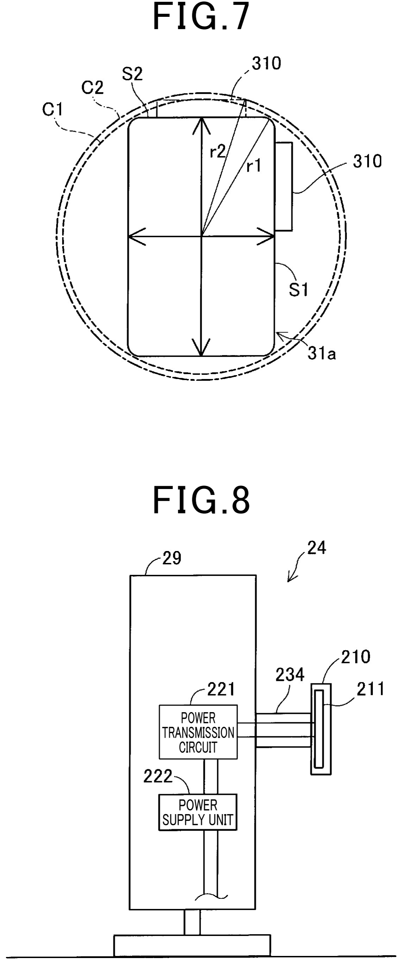

A configuration of the mobile body 31a differs from that of the mobile body 30 according to the first embodiment in that a fork is not provided, a mechanism for raising and lowering the storage rack 50 is provided in an upper portion, a planar shape thereof when viewed from a vertical direction is substantially rectangular, and a height thereof is lower than a height of the bottommost shelf of the storage rack 50 from the floor. Other configurations are identical. Therefore, in the mobile body 31a as well, the power reception apparatus 310 is disposed so as to protrude in the lateral direction from a side surface of a housing of the mobile body 31a. The side surface of the mobile body 31a on which the power reception apparatus 310 is disposed is a side surface in a longitudinal direction. An effect achieved by setting the side surface on which the power reception apparatus 310 is disposed to the side surface in the longitudinal direction will be described with reference to Fig. 7.

Fig. 7 shows, together with the mobile body 31a, a configuration of a comparative example in which the power reception apparatus 310 is disposed on a side surface S2 in a transverse direction, unlike that in the mobile body 31a, using single-dot chain lines. When the power reception apparatus 310 is disposed on a side surface S1 in the longitudinal direction as in the mobile body 31a, a turning radius r1 of the mobile body 31a is smaller than a turning radius r2 of the mobile body in the comparative example. Therefore, when the mobile body 31a moves, interference with fixed objects and the like can be suppressed. Here, as a mechanism for raising and lowering the storage rack 50 described above, for example, a jack apparatus using hydraulic pressure, a screw, or the like can be used.

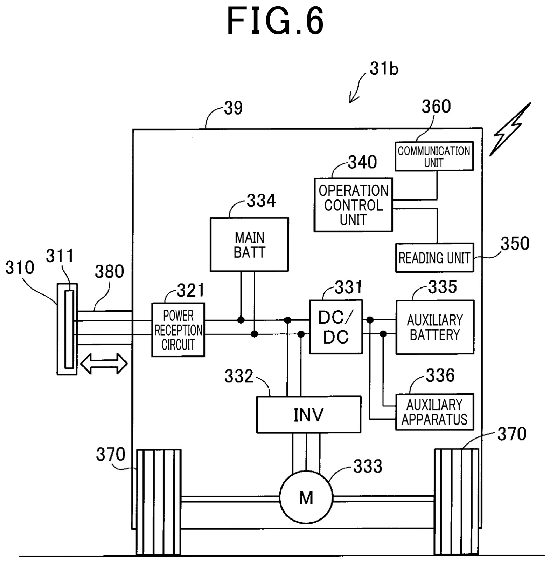

A configuration of the mobile body 31b differs from that of the mobile body 31a in that, as shown in Fig. 6, a power reception-side arm portion 380 is provided, the power reception apparatus 310 protrudes in the lateral direction from the side surface of the housing 39 of the mobile body 31b, and the power reception apparatus 310 is configured to be housed in the side surface of the housing 39 of the mobile body 31b. In Fig. 6, the mechanism for raising the storage rack 50 is omitted. One end of the power reception-side arm portion 380 is fixed to a main body of the mobile body 31b, and another end is connected to the power reception apparatus 310. The power reception-side arm portion 380 moves the power reception apparatus 310 to make the power reception apparatus 310 protrude from the side surface of the housing 39 of the mobile body 31b and house the protruding power reception apparatus 310 in the side surface of the housing 39 of the mobile body 31b.

A configuration of the mobile body 31c differs from the configuration of the mobile body 31a in that, as shown in Fig. 5, the side surface on which the power reception apparatus 310 is disposed is a side surface in the transverse direction. Other configurations are identical.

As shown in Fig. 4 and Fig. 5, the contactless power supply system 1a includes a plurality of power transmission apparatuses 24. In Fig. 4 and Fig. 5, only the power transmission apparatuses 24 provided at some positions Ar24 and Ar25 in the storage area Ar200 are shown. The power transmission apparatuses 24 provided at other positions are omitted.

As shown in Fig. 8, the power transmission apparatus 24 differs from the first power transmission apparatus 21 according to the first embodiment in that a power transmission-side arm portion 234 is provided, the power transmitting unit 210 is configured to protrude in the lateral direction from the side surface of the housing 29 of the power transmission apparatus 24 and be housed in the side surface of the housing 29 of the power transmitting unit 210, and the power transmitting unit 210 is positioned at a position closer to the floor surface. One end of the power transmission-side arm portion 234 is fixed to a main body of the power transmission apparatus 24, and another end is connected to the power transmission section 210. The power transmission-side arm portion 234 moves the power transmitting unit 210 to make the power transmitting unit 210 protrude from the side surface of the housing 29 of the power transmission apparatus 24 and house the protruding power transmitting unit 210 in the side surface of the housing 29 of the power transmission apparatus 24.

As shown in Fig. 4 and Fig. 5, the power transmission apparatuses 24 are disposed at the positions Ar22, Ar23, Ar24, Ar25, and Ar27, respectively. As described above, the position Ar22 is the position at which the storage rack 50 is temporarily placed so that the work object B1 can be stored on the storage rack 50. Therefore, the mobile body 31a can stop at the position Ar22 and receive power from the power transmission apparatus 24. When the mobile body 31a is in a state in which the power reception apparatus 310 is facing the power transmission apparatus 24 under the bottommost shelf of the storage rack 50, a distance between the power transmission apparatus 24 and the mobile body 31a is relatively long. However, as shown in Fig. 5, the power transmission apparatus 24 extends the power transmission-side arm portion 234 and brings the power transmitting unit 210 closer to the mobile body 31a. As a result, a distance between the power transmitting unit 210 and the power reception apparatus 310 becomes an appropriate length, and wireless power supply is normally performed.

The position Ar23 is set midway on the movement path along which the moving bodies 31a to 31c that move the storage rack 50 in a state in which the work objects B1 are stored on all shelves (referred to, hereafter, as a "fully loaded state") to a predetermined position within the storage area Ar200. Therefore, the moving bodies 31a to 31c can receive power from the power transmission apparatus 24 when passing near the position Ar23.

The positions Ar24 and Ar25 are positioned near the position at which the storage racks 50 are stored in the storage area Ar200. Therefore, the moving bodies 31a to 31c that stop to unload the storage rack 50 and place the storage rack 50 at a predetermined position can receive power from the power transmission apparatuses 24 disposed at the positions Ar24 and Ar25. At the position Ar24, the mobile body 31b extends the power reception-side arm portion 380 to bring the power reception apparatus 310 closer to the power transmission apparatus 24. Therefore, the distance between the power transmitting unit 210 and the power reception apparatus 310 becomes an appropriate length, and contactless power supply is normally performed. On the other hand, at the position Ar25, the power reception apparatus 310 of the mobile body 31c is present in a position near the power transmission apparatus 24. Therefore, the distance between the power transmitting unit 210 and the power reception apparatus 310 is an appropriate length. Thus, the power transmission-side arm portion 234 of the power transmission apparatus 24 is not extended.

The position Ar27 is a location for performing a work of loading the work objects B1 that have been inspected at the position Ar26 onto the storage rack 50. The storage rack 50 is temporarily placed at the position Ar27 in a manner similar to that at the position Ar22. In the example in Fig. 5, the storage rack 50 is not placed at the position Ar27. In this state, the moving bodies 31a to 31c are not present at the position Ar27. Therefore, in the power transmission apparatus 24 disposed at the position Ar27, the power transmitting unit 210 is housed in the side surface of the housing body. Therefore, when the moving bodies 31a to 31c carrying the empty storage rack 50 arrive at the position Ar27, the storage rack 50 interfering with the power transmission apparatus 24 can be suppressed.

The contactless power supply system 1a according to the second embodiment, described above, achieves effects similar to those of the contactless power supply system 1 according to the first embodiment. In addition, because the power reception apparatuses 310 of the mobile body 31a and the mobile body 31b are attached to the side surface in the longitudinal direction among the side surfaces of the housing 39, the turning radius of the moving bodies 31a and 31b as a whole can be made small, and interference with fixed objects and the like can be suppressed, compared to a configuration in which the power reception apparatuses 310 are attached to an end portion in the transverse direction.

Furthermore, the mobile body 31b includes the power reception-side arm portion 380 that is connected to the power reception apparatus 310, and moves the power reception apparatus 310 to make the power reception apparatus 310 protrude from the side surface of the housing 39 of the mobile body 31b, and house the protruding power reception apparatus 310 in the side surface of the housing 39 of the mobile body 31b. Therefore, the distance between the power transmitting unit 210 and the power reception apparatus 310 can be adjusted to an appropriate length, and power reception efficiency can be improved. For example, even if the position of the mobile body 31b in the moving path shifts from a scheduled position for some reason, the distance between the power transmitting unit 210 and the power reception apparatus 310 can be adjusted to an appropriate distance.

In addition, the power transmission apparatus 24 includes the power transmission-side arm portion 234 that is connected to the power transmitting unit 210, and moves the power transmitting unit 210 to make the power transmitting unit 210 protrude from the housing 29 of the power transmission apparatus 24 and house the protruding power transmitting unit 210 in the housing 29 of the power transmission apparatus. Therefore, the distance between the power transmitting unit 210 and the power reception apparatus 310 can be adjusted to an appropriate length. Furthermore, because the power transmitting unit 210 can be housed in the housing 29 when contactless power supply is not being performed, the power transmission apparatus 24 interfering with other objects such as the moving bodies 31a to 31c can be suppressed.

### C. Third embodiment

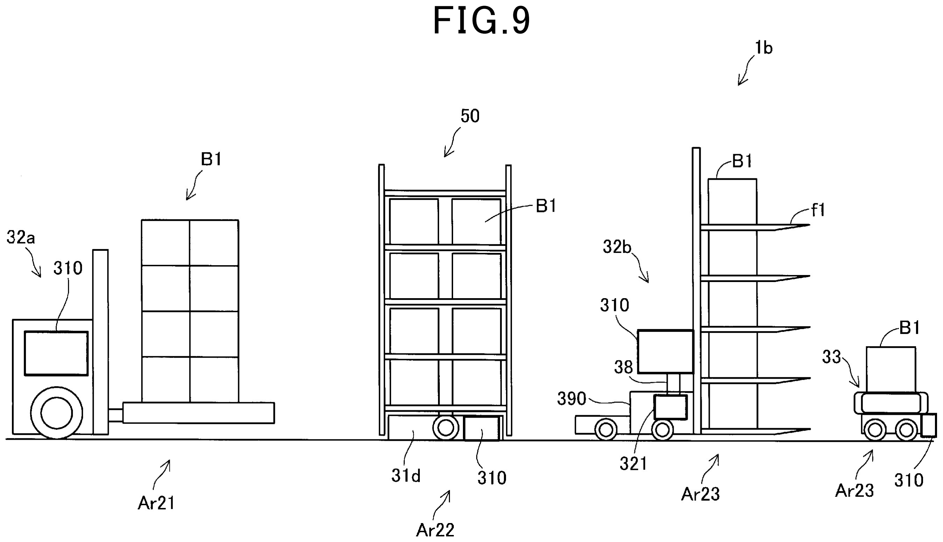

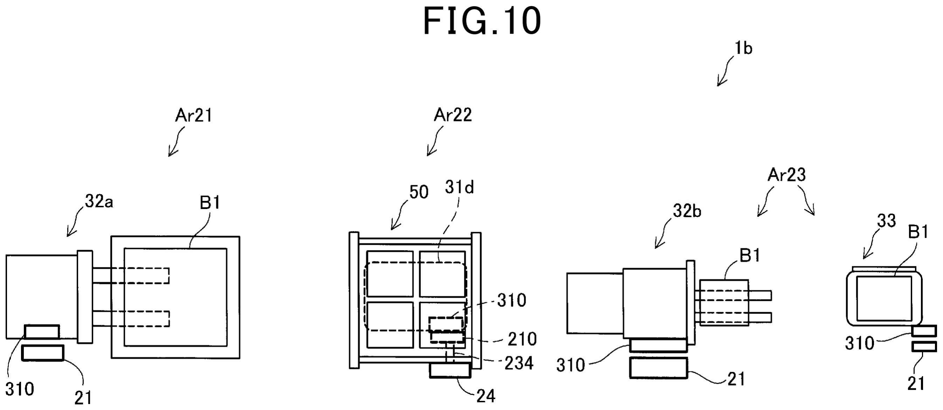

A contactless power supply system 1b shown in Fig. 9 and Fig. 10 differs from that according to the second embodiment in types of mobile body and power transmission apparatus used. Specifically, as shown in Fig. 9 and Fig. 10, in the contactless power supply system 1b of the third embodiment, a mobile body 32a, a mobile body 31d, a mobile body 32b, and a mobile body 33 are used.

The mobile body 32a is configured as the forklift-type AGV, similar to the mobile body 30 according to the first embodiment. The mobile body 32a differs from the mobile body 30 shown in Fig. 3 in that the power reception apparatus 310 is disposed inside the housing. The mobile body 32a is positioned at the position Ar21 and stopped to unload the work object B1. At this time, as shown in Fig. 10, contactless power supply is performed from the first power transmission apparatus 21 described according to the first embodiment to the mobile body 32a (power reception apparatus 310).

The mobile body 31d differs from the mobile body 31a according to the second embodiment in that the power reception apparatus 310 is disposed inside the housing 39.

The mobile body 31d is positioned at the position Ar22, and receives power from the power transmission apparatus 24 while a worker (not shown) is performing work to store the work object B1 on the storage rack 50. Here, in Fig. 9, the first power transmission apparatus 21 and the power transmission apparatus 24 are omitted for convenience of illustration.

The mobile body 32b is configured as a forklift-type AGV having multi-level forks. The mobile body 32b differs from the mobile body 32a in that forks f1 at multiple levels are provided and the power reception apparatus 310 is configured as a separate body from a main body of the mobile body 32b. Two work objects B1 are mounted on each fork f1. As shown in Fig. 9, in the mobile body 32b, the power reception apparatus 310 is configured as a separate body from a main body 390 of the mobile body 32b. The power reception apparatus 310 is supported by a support column 38 extending vertically upward from a ceiling surface of the main body 390. Therefore, the power reception apparatus 310 is positioned above the main body 390. Here, in Fig. 9, the power reception circuit 321 is schematically shown as a configuration within the main body 390. Because the power reception apparatus 310 is configured as a separate body from the main body 390, space required to house a mechanism for contactless power supply in the main body 390 can be reduced, and the main body 390 can be made smaller in size. The mobile body 32b receives power from the first power transmission apparatus 21 disposed at the position Ar23 when passing through the position Ar23.

The mobile body 33 differs from the mobile body 31a in that the power reception apparatus 310 is disposed in a front end portion of a side surface and protrudes in the advancing direction. As a result of this configuration, the power reception apparatus 310 can be brought closer to the power transmission apparatus 21 because the power reception apparatus 310 is protruding. Power reception efficiency can be improved.

The contactless power supply system 1b according to the third embodiment, described above, achieves effects similar to those of the contactless power supply system 1 according to the first embodiment and the contactless power supply system 1a according to the second embodiment.

### D. Fourth embodiment

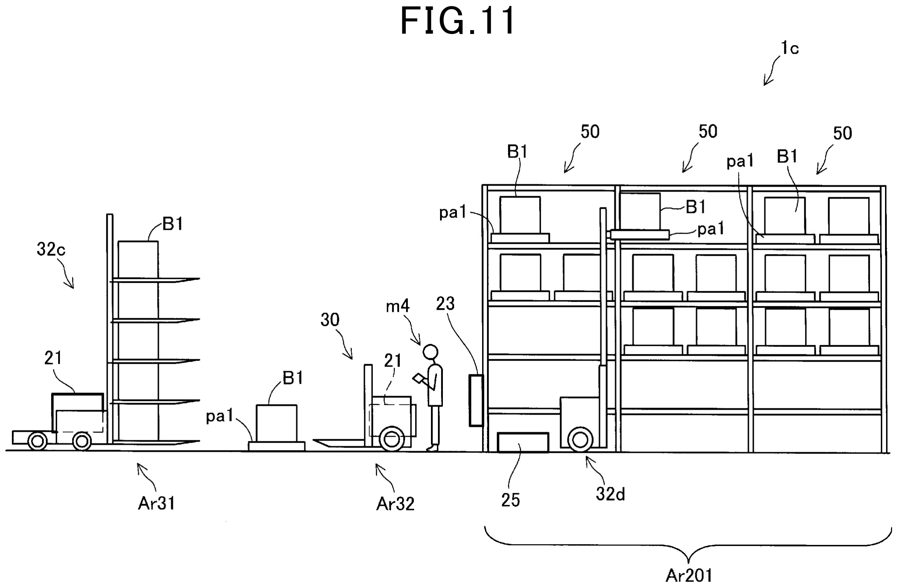

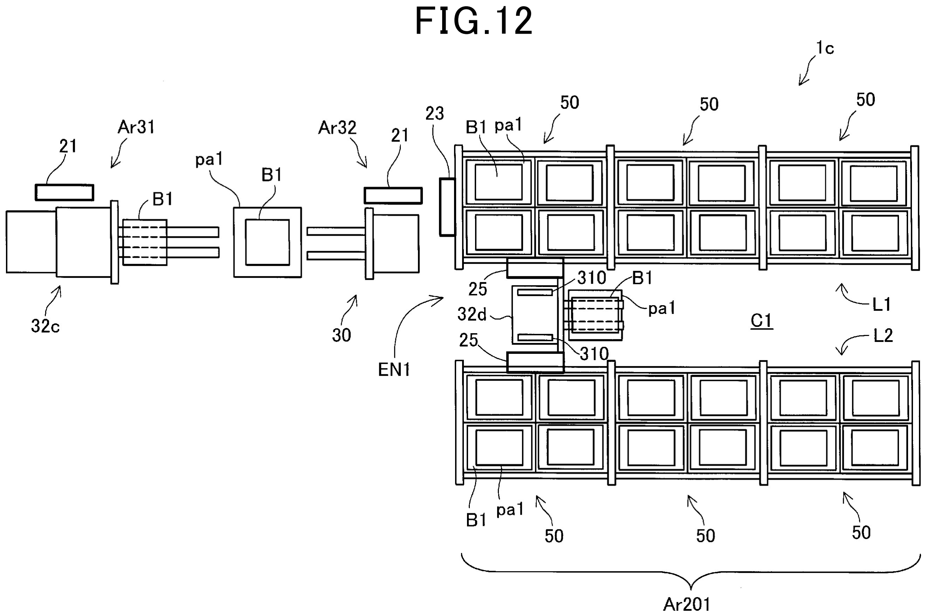

A contactless power supply system 1c shown in Fig. 11 and Fig. 12 differs from that according to the second embodiment in the types of mobile body and power transmission apparatus used, and in that the work object B1 is transferred and stored, placed on a pallet pa1 midway on a conveyance path. Specifically, as shown in Fig. 11 and Fig. 12, in the contactless power supply system 1c according to the fourth embodiment, in addition to the above-mentioned mobile body 30, moving bodies 32c and 32d are used.

The mobile body 32c is identical to the mobile body 32b according to the third embodiment in that the power reception apparatus 310 is integrally configured with the main body of the mobile body 32b. The mobile body 32c is positioned at a position Ar31, and receives power from the first power transmission apparatus 21 while a worker (not shown) is performing work of unloading the work object B1 from the mobile body 32c and placing the work object B1 on the pallet pa1.

The mobile body 30 positioned at a position Ar32 is stopped such that the work object B1 placed on the pallet pa1 is placed onto the forks. At this time, the mobile body 30 receives power from the first power transmission apparatus 21. Here, at the position Ar32, the worker m4 operates the mobile body 30 using a remote controller.

As shown in Fig. 12, two rack rows L1 and L2 in which a plurality of storage racks 50 are arranged is provided in a storage area Ar201. A width of an aisle C1 between the two rack rows L1 and L2 is relatively narrow, and wide enough for only a single mobile body 32d to pass through. According to the present embodiment, the aisle C1 is a one-way aisle, and an end portion on a side closer to the position Ar32 is set as an entrance EN1 of the aisle C1. As shown in Fig. 11 and Fig. 12, the mobile body 32d has entered the aisle C1 from the entrance EN1 and is about to house the work object B1 that is on the pallet pa1 on a topmost shelf of the second storage rack 50 from the entrance EN1.

The mobile body 32d is configured as the forklift-type AGV. The mobile body 32d differs from the mobile body 30 in that a fork capable of being raised to and lowered from a relatively high position is provided, and two power reception apparatuses 310 and two power reception circuits 321 are included. Other configurations are similar to those of the mobile body 30. Here, in Fig. 12, only both of the power reception apparatuses 310 are shown. The two power reception apparatuses 310 are provided on both sides in a width direction of the mobile body 32d.

The contactless power supply system 1c includes, as the power transmission apparatuses, the above-described first power transmission apparatus 21 disposed at the position Ar31 and, in addition to the first power transmission apparatus 21 disposed at the position Ar31, the third power transmission apparatus 23 disposed on a wall surface of the storage rack 50 closest to the entrance EN1 in the rack row L1, and two fifth power transmission apparatuses 25. The third power transmission apparatus 23 is the same as the third power transmission apparatus 23 according to the first embodiment, described above.

The fifth power transmission apparatus 25 differs from the power transmission apparatus 24 in that the power transmission-side arm portion 234 is not included, and the power transmitting unit 210 neither protrudes from the housing 29 nor is housed in the housing 29. Other configurations are similar to those of the power transmission apparatus 24. As shown in Fig. 12, the two power transmission apparatuses 25 are arranged below the bottommost shelf of the storage rack 50 closest to the entrance EN1 in the rack row L1 and below of the bottommost shelf of the storage rack 50 closest to the entrance EN1 in the rack row L2, and oppose each other. Below the bottommost shelf of the storage rack 50 corresponds to a portion lower than a minimum ground clearance at which the mobile body 32d can pick up the work object B1 from the shelf. According to the present embodiment, the fifth power transmission apparatus 25 is arranged such that a surface of the housing 29 on the power transmitting unit 210 side is positioned within 500 mm (millimeters) from an end portion on a side of the bottommost portion of the storage rack 50 facing the aisle C1, that is, a side on which the mobile body 32 picks up the work object B1. In addition, the fifth power transmission apparatus 25 is arranged such that the power transmitting unit 210 is disposed in a position directly opposite the power reception apparatus 310 when the work object B1 is picked up from the storage rack 50 closest to the entrance EN1 in the two rack rows L1 and L2. That is, the two power transmission apparatuses 25 are both arranged such that the power transmitting units 210 face the aisle C1. When the mobile body 32d enters the aisle C1 from the entrance EN1, the mobile body 32d passes between the two power transmission apparatuses 25 and receives power from the two power transmission apparatuses 25 at this time. An amount of power supply can be increased by power being simultaneously received from the two power transmission apparatuses 25 in this manner. Power supply efficiency can be improved.

As a result of the contactless power supply system 1c according to the fourth embodiment, described above, effects similar to those of the contactless power supply system 1 according to the first embodiment and the contactless power supply system 1a according to the second embodiment are achieved. In addition, because the third power transmission apparatus 23 is disposed on the wall surface of the storage rack 50, dead space beside the storage rack 50 can be effectively used. Furthermore, compared to a configuration in which a fixture for fixing the third power transmission apparatus 23 is provided separately from the storage rack 50, setup cost of the contactless power supply system 1c can be reduced, and setup space required for the contactless power supply system 1c can be reduced.

In addition, because the two power transmission apparatuses 25 are arranged such that the power transmitting units 210 face the aisle C1, when the mobile body 32d stops to remove the work object B1 from the storage rack 50 or store the work object B1 on the storage rack 50, contactless power supply can be performed from the power transmission apparatuses 25 to the power reception apparatus 310. Therefore, compared to a configuration in which the mobile body 32d is stopped for contactless power supply separately from the removal or storage of the work object B1 on the storage rack 50, usage efficiency of the mobile body 32d can be improved and efficiency of conveyance of the work object can be improved.

Furthermore, the two power transmission apparatuses 25 are set such that respective power transmitting units 210 are positioned on the side of the aisle C1 closer to the entrance EN1. Therefore, contactless power supply can be performed for the mobile body 32d that is traveling at a timing at which the mobile body 32d enters the aisle C1. The side of the aisle C1 closer to the entrance EN1 is a location through which the mobile body 32d is highly likely to pass. Therefore, likelihood of contactless power supply can be increased. Moreover, the amount of power supply can be increased because power is simultaneously received from the two power transmission apparatuses 25. Power supply efficiency can be improved.

In addition, because the power transmission apparatus 25 is set in a portion of the storage rack 50 that is lower than the minimum ground clearance at which the work object B1 can be picked up, the power transmission apparatus 25 can be set using dead space in the storage rack 50 that cannot be used to store the work object B1. Storage efficiency of the storage rack 50 can be improved. Furthermore, reduction in setup space required for the contactless power supply system 1c can be obtained.

Furthermore, at least a portion of the power transmission apparatus 25 is positioned in the bottommost portion of the storage rack 50 within 500 mm from the end portion of the storage rack 50 on the side on which the mobile body 32d picks up the work object B1. Therefore, compared to a configuration in which not even a portion of the power transmission apparatus 25 is positioned within 500 mm from the end portion, the distance between the power transmission apparatus 25 and the power reception apparatus 310 becoming excessively long can be suppressed. Moreover, setup of the power transmission apparatus 25 and replacement work for maintenance and the like can be easily performed.

In addition, the power transmission apparatus 25 is arranged such that the power transmitting unit 210 is disposed at a position directly opposite the mobile body 32d when the mobile body 32b picks up the work object B1 stored in the storage rack 50. Therefore, contactless power supply can be performed from the power transmission apparatus 25 to the power reception apparatus 310 when the mobile body 32d stops to pick up the work object B1. Consequently, compared to a configuration in which the mobile body 32d is stopped for contactless power supply separately from stopping to pick up the work object B1, usage efficiency of the mobile body 32d can be improved, and efficiency of conveyance of the work object B1 can be improved.

### E. Fifth embodiment

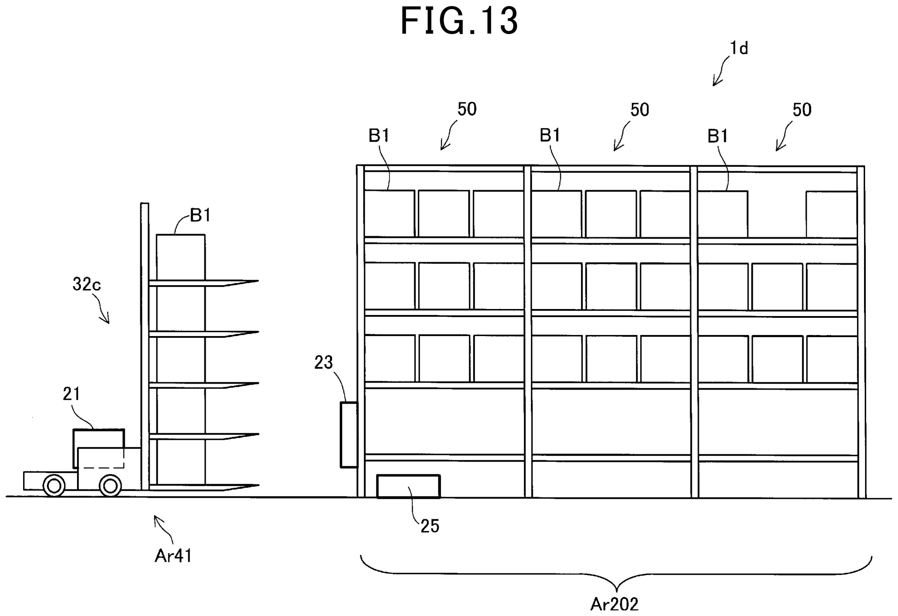

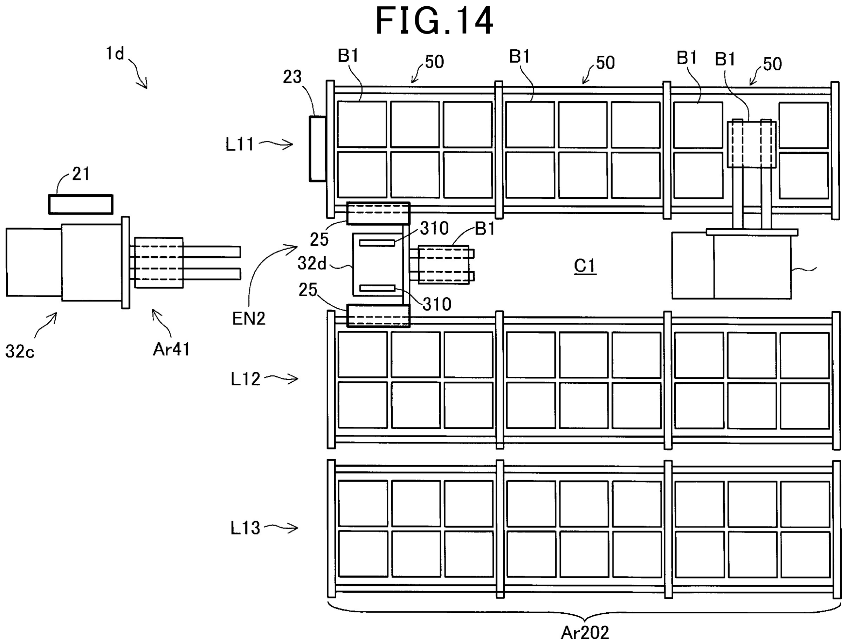

A contactless power supply system 1d according to a fifth embodiment shown in Fig. 13 and Fig. 14 differs from the contactless power supply system 1c according to the fourth embodiment in that the work object B1 is housed on the storage rack 50 without using the pallet pa1.

As shown in Fig. 14, three rack rows L11, L12, and L13 are provided in a storage area Ar202. An aisle C2 is provided between the rack rows L11 and L12. The fifth power transmission apparatus 25 is disposed in the bottommost portion of the storage rack 50 that is closest to an entrance EN2 of the aisle C2 in the two rack rows L11 and L12. In addition, the third power transmission apparatus 23 is disposed on a side wall of the rack row L11. A position Ar41 is a position immediately before the entrance EN2, and corresponds to a waiting position for a mobile body about to enter the aisle C2. The first power transmission apparatus 21 is provided at the position Ar41. The first power transmission apparatus 21 supplies power to the mobile body 32c that is stopped at the position Ar41.

The contactless power supply system 1d according to the fifth embodiment, described above, achieves effects similar to those of the contactless power supply system 1c according to the fourth embodiment.

### F. Sixth embodiment

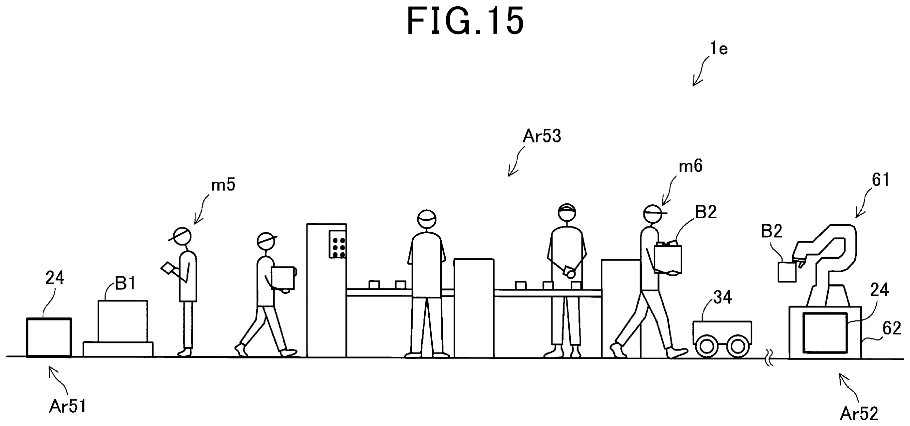

A contactless power supply system 1e according to a sixth embodiment shown in Fig. 15 is applied to a manufacturing process. Specifically, inside a factory, an inspection location for the work objects B1, such as parts used in work, is set at a position Ar51 next to a workspace Ar53 at which a worker performs the work. The power transmission apparatus 24 is disposed at this position Ar51. The work object B1 is transferred by a mobile body (not shown) and placed at the position Ar51. At this time, the mobile body receives power from the power transmission apparatus 24. The part (work object B1) inspected by a worker m5 at the position Ar51 is used for the work at the workspace Ar53.

A semi-finished product (hereinafter referred to as a "work object B2") obtained by the work at the workspace Ar53 is placed on a mobile body 34 by a worker m6 and transferred to a vicinity of an industrial robot 61. The mobile body 34 differs from the mobile body 33 according to the third embodiment shown in Fig. 9 in that the power reception apparatus 310 is housed inside the housing of the mobile body. Other configurations are the similar to those of the mobile body 33. The industrial robot 61 picks up the transferred work object B2 from the mobile body 34 and performs predetermined processing on the work object B2. The power transmission apparatus 24 is disposed in a mounting base 62 of the industrial robot 61. When the work object B2 is picked up, the mobile body 34 is stopped near the mounting table 62 and receives power from the power transmission apparatus 24.

The contactless power supply system 1e according to the sixth embodiment, described above, achieves effects similar to those of the contactless power supply system 1 according to the first embodiment.

### G. Seventh embodiment

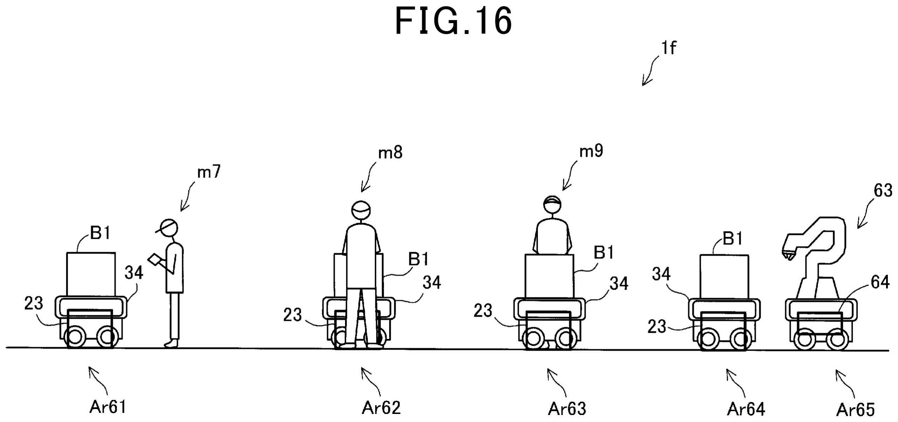

A contactless power supply system 1f according to a seventh embodiment shown in Fig. 16 is applied to a manufacturing process in a manner similar to the contactless power supply system 1e according to the sixth embodiment. Specifically, inside a factory, the third power transmission apparatus 23 is disposed at positions Ar61, Ar62, and Ar63 near locations at which workers perform work, and at a position Ar64 at which the mobile body 34 is scheduled to stop. The position Ar61 corresponds to a position near a location at which a worker m7 performs work such as inspection. The position Ar62 corresponds to a position at which a worker m8 performs work. In a similar manner, the position Ar63 corresponds to a position at which a worker m9 performs work. The industrial robot 61 on the right side includes a power reception coil 64 and a battery (not shown) that stores power supplied through the power reception coil 64. A work object to be processed by an industrial robot 63 is transferred by the mobile body 34. Here, a mobile body (not shown) (a mobile body differing from the mobile body 34) includes the power reception apparatus 310 and a power transmitting unit having a configuration similar to that of the power transmitting unit 210. When such a mobile body stops near the position Ar65 at which the industrial robot 63 is located to supply the work object to the industrial robot 63, contactless power supply is performed from the power transmitting unit to the power reception coil 64 of the industrial robot 63. Here, a so-called "cell production system" in which all processes are performed at the respective positions Ar62, Ar63, and Ar65 by the workers m8 and m9 and the industrial robot 63 is also possible.

The contactless power supply system 1f according the seventh embodiment described above achieves effects similar to the contactless power supply system 1 according to the first embodiment.

### H. Eighth embodiment

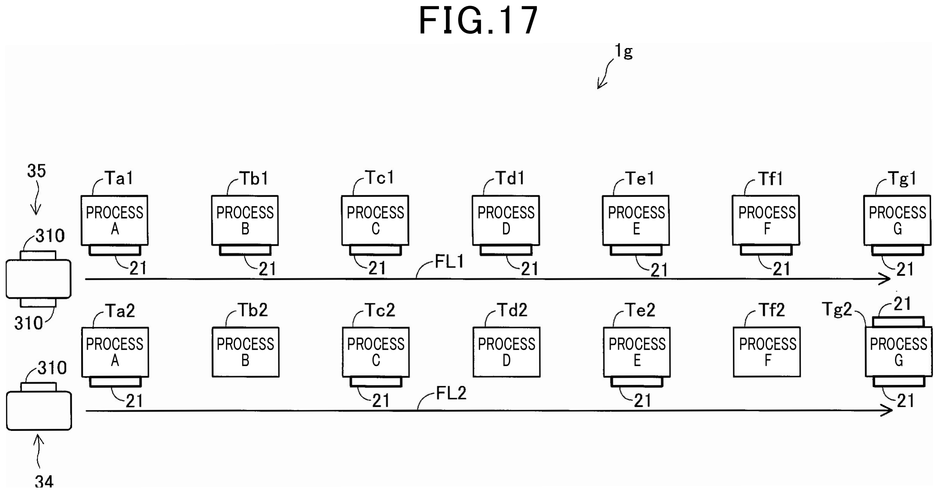

A contactless power supply system 1g according to an eighth embodiment shown in Fig. 17 is applied to two production lines FL1 and FL2 composed of a total of seven processes, from process A to process G. These two production lines FL1 and FL2 are linear production lines and provided in parallel to each other. The production line FL1 includes production tables Ta1 to Tg1 for the respective processes. In a similar manner, the production line FL2 includes production tables Ta2 to Tg2 for the respective processes.

On the production line FL1, a mobile body 35 transfers the semi-finished product between the processes. Therefore, the mobile body 35 stops in front of each of the production tables Ta1 to Tg1. At each of the production tables Ta1 to Tg1, the power transmission apparatus 21 is provided at a position facing the movement path of the mobile body 35. Therefore, the mobile body 35 receives power from the first power transmission apparatus 21 while stopped at each of the production tables Ta1 to Tg1, that is, while processing is performed at each of the production tables Ta1 to Tg1. The mobile body 35 differs from the mobile body 34 according to the sixth and seventh embodiments in that two power reception apparatuses 310 are provided. The two power reception apparatuses 310 are disposed in positions near left and right ends of the mobile body 35 in the advancing direction. The two power reception apparatuses 310 are connected in parallel with each other with respect to the main battery 334 and the motor 333.

On the production line FL2, the mobile body 34 transfers the semi-finished product between the processes. Therefore, the mobile body 35 stops in front of each of the production tables Ta2 to Tg2. The mobile body 34 is identical to the mobile body 34 according to the sixth and seventh embodiments. At the four production tables Ta2, Tc2, Te2, and Tg2, among the production tables Ta2 to Tg2, the power transmission apparatus 21 is provided at a position facing the movement path of the mobile body 34. Processing time at these four production tables Ta2, Tc2, Te2, and Tg2 is longer than the processing time at the other production tables. Therefore, in the production line FL2, the first power transmission apparatus 21 is provided only at a position at which power can be supplied for a longer period of time. At the production table Tg2, in addition to the position facing the movement path of the mobile body 34, the first power transmission apparatus 21 is also arranged at a position facing the movement path of the mobile body 35 in the adjacent production line FL1 as well. Therefore, while processing is performed at the production table Tg1, the mobile body 35 can receive power from both the first power transmission apparatus 21 provided at the production table Tg1 and the first power transmission apparatus 21 provided at the production table Tg2.

The contactless power supply system 1g according to the eighth embodiment, described above, achieves effects similar to the contactless power supply system 1 according to the first embodiment.

### I. Ninth embodiment

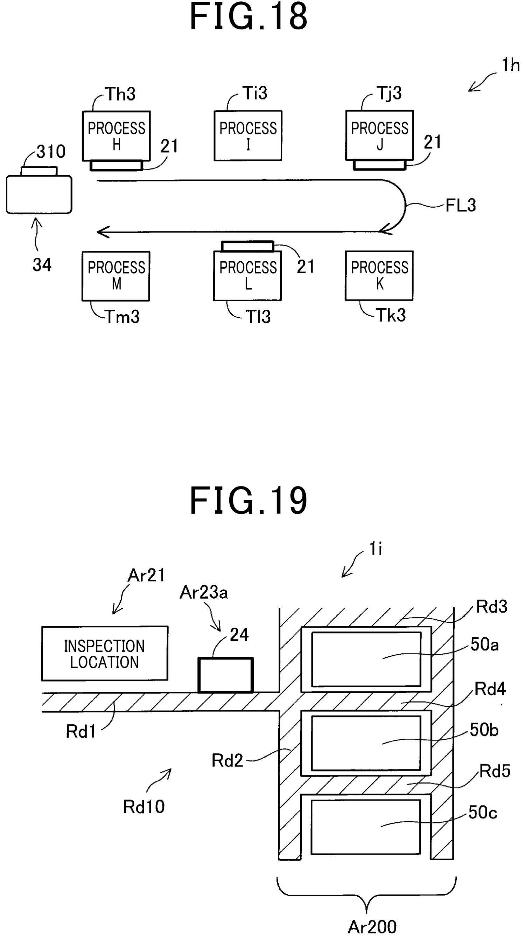

A contactless power supply system 1h according to an eighth embodiment shown in Fig. 18 is applied to a production line FL3 composed of a total of six processes, from process H to process M. The production line FL3 is a U-turn-shaped production line. The production line FL3 includes production tables Th3 to Tm3 for the respective processes.

On the production line FL3, the mobile body 34 transfers the semi-finished product at each process. Therefore, the mobile body 34 stops in front of each of the production tables Ta1 to Tg1. The mobile body 34 is identical to the mobile body 34 according to the sixth and seventh embodiments. At the three production tables Th3, Tj3, and T13, among the production tables Th2 to Tm3, the power transmission apparatus 21 is provided at a position facing the movement path of the mobile body 34. The processing time at these three production tables Th3, Tj3, and Tl3 is longer than the processing time at the other production tables. Therefore, in the production line FL3, the first power transmission apparatus 21 is provided only at a position at which power can be supplied for a longer period of time.

The contactless power supply system 1h according to the ninth embodiment, described above, achieves effects similar to those of the contactless power supply system 1 according to the first embodiment and the contactless power supply system 1g according to the eighth embodiment.

A contactless power supply system 1i according to a tenth embodiment shown in Fig. 19 differs from the contactless power supply system 1a according to the second embodiment in the setup position of the power transmission apparatus 24. Other configurations are identical to those of the contactless power supply system 1a. Here, the mobile body is omitted in Fig. 19.

According to the tenth embodiment, a movement path Rd10 from the position Ar21, that is, the inspection location to three storage racks 50 arranged in the storage area Ar20 includes a plurality of secondary movement paths. Here, to facilitate differentiation among the three storage racks 50, the storage racks 50 will be referred to hereafter as storage racks 50a, 50b, and 50c. These three storage racks 50a, 50b, and 50c correspond to a "secondary work site" in the present disclosure. A first secondary movement path is composed of a path Rd1 that runs from the position Ar21 that is the inspection location to the storage area Ar200, a path Rd2 that intersects the path Rd1 and forms a T-shaped path together with the path Rd1, and a path Rd3 that extends from the path Rd2 and passes beside the storage rack 50a. A second secondary movement path is composed of the path Rd1, the path Rd2, and a path Rd4 that extends from the path Rd2 and passes beside the storage rack 50b. A third secondary movement path is composed of the path Rd1, the path Rd2, and a path Rd5 that extends from the path Rd2 and passes beside the storage rack 50c. The three paths Rd3, Rd4, Rd5 described above are parallel to one another. The power transmission apparatus 24 is disposed at a position at which power can be supplied to a passing mobile body without contact, in an area through which the mobile body passes on a common path of the three secondary movement paths. Specifically, according to the present embodiment, the power transmission apparatus 24 is disposed facing a position Ar23a on the pathRd1 near a portion connecting to the path Rd2. Therefore, the mobile body can receive power from the power transmission apparatus 24 regardless of which of the three storage racks 50a to 50c the mobile body is moving toward.

The contactless power supply system 1i according to the tenth embodiment, described above, achieves effects similar to the contactless power supply system 1 according to the first embodiment and the contactless power supply system 1a according to the second embodiment.

### K. Other embodiments

(K1) According to the embodiments, the power reception coil 311 is provided such that the central axis of the power reception coil 311 is perpendicular to the advancing direction of the mobile body. However, the present disclosure is not limited thereto. The power reception coil 311 may be provided such that the central axis of the power reception coil 311 is in a direction obliquely intersecting the advancing direction of the mobile body or a direction parallel to the advancing direction.

(K2) According to the fourth embodiment and the fifth embodiment, the aisles C1 and C2 are one-way aisles. However, aisles C1 and C2 may allow two-way traffic. In this configuration, both end portions of the aisles C1 and C2 serve as entrances. Therefore, the fifth power transmission apparatus 25 may be disposed at both end portions.

(K3) According to the fourth embodiment and the fifth embodiment, the fifth power transmission apparatus 25 is disposed below the bottommost shelf of the storage rack 50. However, the fifth power transmission apparatus 25 may be disposed at an arbitrary position on the storage rack 50 at which power can be transmitted to the power reception apparatus 310 of the mobile body 32d. In addition, the fifth power transmission apparatus 25 is disposed such that the surface of the housing 29 on the power transmitting unit 210 side is positioned within 500 mm (millimeters) from the end portion on the side on which the mobile body 32d picks up the work object B1. However, the present disclosure is not limited thereto. For example, the overall fifth power transmission apparatus 25 may be disposed within 500 mm (millimeters) from the end portion on which pick-up is performed. That is, in general, the fifth power transmission apparatus 25 may be disposed such that at least a portion of the fifth power transmission apparatus 25 is positioned within 500 mm (millimeters) from the end portion on which pick-up is performed. Here, the fifth power transmission apparatus 25 may be disposed such that at least a portion of the fifth power transmission apparatus 25 is positioned within an arbitrary reachable distance, rather than being limited to 500 mm from the end portion on which pick-up is performed.

(K4) In the mobile body 31b, instead of the power reception-side arm portion 380, a pantograph or a spring may be used as a mechanism for making the power reception apparatus 310 protrude from the side surface of the housing 39 of the mobile body 31b and housing the protruding power reception apparatus 310 in the side surface of the housing 39 of the mobile body 31b.

The present disclosure is not limited to the above-described embodiments and can be implemented by various configurations without departing from the spirit of the disclosure. For example, technical features according to embodiments and modifications that correspond to technical features in each aspect described in the summary of the invention can be replaced and combined as appropriate to solve some or all of the above-described issued or to achieve some or all of the above-described effects. Furthermore, the technical features may be omitted as appropriate unless described as a requisite in the present specification.

## Claims

1. A contactless power supply system (1, 1a to 1i) comprising:
a mobile body (30, 31a to 31d, 32a, to 32d, 33 to 35) that includes a power reception apparatus (310), and transfers a work object from a first work site (WA1) to a second work site (WA2); and
a power transmission apparatus (21 to 25) that is capable of supplying power to the power reception apparatus without contact in at least either of a state in which the mobile body is stopped at at least a scheduled stop position (Ar11, Ar13, Ar22 to Ar25, Ar27, Ar32, Ar201, Ar41, Ar202, Ar51, Ar52, Ar61 to Ar64, Ta1 to Tg1, Ta2, Tc2, Te2, Tg2, Th3, Tj3, T13, Ar23a) at which the mobile body is scheduled to stop within a movement path of the mobile body between the first work site and the second work site, and a state in which the mobile body is moving along the movement path, wherein
the power reception apparatus includes at least a power reception coil (311) provided on a side surface side of the mobile body.

2. The contactless power supply system according to claim 1, wherein:
a housing of the mobile body includes a contour shape having a longitudinal direction and a transverse direction when viewed in a vertical direction; and
the power reception apparatus is attached to a side surface in the longitudinal direction among side surfaces of the housing.

3. The contactless power supply system according to claim 1, wherein:
an attitude of the mobile body in an advancing direction is prescribed in advance; and
the power reception coil is provided such that a central axis of the power reception coil is in a direction perpendicular to the advancing direction.

4. The contactless power supply system according to claim 1, wherein:
the power reception apparatus is disposed so as to be capable of protruding outside from a side surface of a housing of the mobile body; and
the mobile body further includes a power reception-side arm that is connected to the power reception apparatus, and moves the power reception apparatus to make the power reception apparatus protrude from the side surface of the housing of the mobile body and house the protruding power reception apparatus in the side surface of the housing of the mobile body.

5. The contactless power supply system according to claim 1, wherein:
the power transmission apparatus is disposed in a fixed object set within the movement path.

6. The contactless power supply system according to claim 5, wherein:
the fixed object includes one or more storage racks storing the work object.

7. The contactless power supply system according to claim 6, wherein:
the power transmission apparatus includes a power transmitting unit that includes at least a power transmission coil;
the fixed object includes a plurality of storage racks that are disposed so as to be spaced to form an aisle that is wide enough for a single mobile body to pass and not wide enough for a plurality of moving bodies to pass each other; and
the power transmission apparatus is disposed such that the power transmitting unit faces the aisle.

8. The contactless power supply system according to claim 7, wherein:
a plurality of power transmission apparatuses are provided;
the aisle is set with an entrance in advance; and
the plurality of power transmission apparatuses are set so that the power transmitting units are positioned on a side of the aisle near the entrance.

9. The contactless power supply system according to claim 6, wherein:
the mobile body is configured to be capable of picking up the work object stored on the storage rack; and
the power transmission apparatus is set in a portion of the storage rack lower than a minimum ground clearance at which the work object can be picked up.

10. The contactless power supply system according to claim 9, wherein:
the power transmission apparatus is set such that at least a portion is positioned within 500 millimeters from an end portion of the storage rack on a side on which the mobile body picks up the work object, in a bottommost portion of the storage rack.

11. The contactless power supply system according to claim 6, wherein:
the mobile body is configured to be capable of picking up the work object stored on the storage rack; and
the power transmission apparatus is disposed such that the power transmitting unit is disposed in a directly opposite position when the mobile body picks up the work object stored on the storage rack.

12. The contactless power supply system according to claim 1, wherein:
the power transmission apparatus includes
a power transmitting unit that includes at least a power transmission coil and is disposed to be capable of protruding outside from a housing of the power supply apparatus, and
a power transmission-side arm portion that is connected to the power transmitting unit, and moves the power transmitting unit to make the power transmitting unit protrude from the housing of the power supply apparatus and house the protruding power transmitting unit in the housing of the power supply apparatus.

13. The contactless power supply system according to claim 1, wherein:
the power transmission apparatus is set in a position at which the power reception apparatus of the mobile body that is passing by can be supplied power without contact, in an area within the movement path through which the mobile body passes.

14. The contactless power supply system according to claim 13, wherein:
the second work site includes two or more secondary work sites;
the movement path includes a plurality of secondary movement paths from the first work site to the two or more secondary work sites; and
the power transmission apparatus is set in a position at which the power reception apparatus of the mobile body that is passing by can be supplied power without contact in an area through which the mobile body passes within a common path that is a path common to the plurality of secondary movement paths.
